# EUROPÄISCHE PATENTANMELDUNG

(11) **EP 2 384 996 A1**
(43) Veröffentlichungstag der Anmeldung: **09.11.2011**
(21) Anmeldenummer: 10405093.5
(22) Anmeldetag: 04.05.2010
(51) Int. Cl.: B65D 85/804, A47J 31/06

(54) **Kapsel für ein Extraktionsgut, Verfahren zu deren Herstellung, und Einrichtung zum Brühen von Kaffee**

(71) Anmelder: Luna Technology Systems LTS GmbH, 9016 St. Gallen (CH)
(72) Erfinder: Deuber, Louis, 8805 Richterswil (CH)
(74) Vertreter: Frei Patent Attorneys

(57) **Zusammenfassung**

Gemäss einem Aspekt der Erfindung wird eine Kaffeekapsel (1) zur Verfügung gestellt, deren äussere Abmessungen auf die Grösse einer Filterkaffee-Kapsel abgestimmt ist, die aber ein Trennelement (22) aufweist, welches einen Leerbereich (32) von einem Extraktionsgutbereich (31) trennt. Weiter ist mindestens ein Flüssigkeitskanal (33) vorhanden, der den Leerbereich beispielsweise durchquert. Der Flüssigkeitskanal/die Flüssigkeitskanäle und der Extraktionsgutbereich sind so ausgestaltet, dass an einem Injektionsort in die Kapsel eingeleitetes Wasser bzw. in der Kapsel erzeugtes Getränk im Wesentlichen nicht in den Leerbereich gelangt.

## Beschreibung

Die Erfindung betrifft die Zubereitung von Getränken oder dergleichen aus einem in einer Kapsel enthaltenen Extraktionsgut, beispielsweise gemahlenem Kaffee. Sie betrifft insbesondere eine anstechbare Kapsel als Portionsverpackung sowie ein Verfahren zu deren Herstellung

Extraktionsgeräte zum Zubereiten von Getränken aus einem in einer Portionsverpackung vorhandenen Extraktionsgut sind beispielsweise als Kaffee- oder Espressomaschinen bekannt und erfreuen sich nach wie vor steigender Beliebtheit. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Extraktionsflüssigkeit - im Allgemeinen heisses Wasser - eingeleitet. Auf der zweiten Seite wird das Extraktionsprodukt aus der Kapsel ausgeleitet. Je nach zuzubereitendem Getränk und System muss dabei im Innern der Kapsel ein erheblicher Druck von beispielsweise 5-20 bar herrschen.

Als Kapselmaterialien sind insbesondere Aluminium und Kunststoffe, bspw. Polypropylen bekannt geworden. Aluminiumkapseln bringen eine sehr gute Haltbarkeit des Extraktionsguts, sind aber in der Herstellung energieaufwändig. Polypropylenkapseln sind betreffend Energieaufwand und Entsorgung vorteilhaft, stellen aber erhöhte Anforderungen an den Anstechmechanismus.

Auf dem Markt sind sowohl Kapseln mit integrierten Filtermitteln erhältlich als auch Kapseln, die lediglich eine das Extraktionsgut umschliessende Hülle aufweisen. Für letztere muss der Anstechmechanismus so ausgebildet sein, dass nicht in unerwünschter Weise Extraktionsgut zusammen mit dem Extraktionsprodukt aus der Kapsel abgeführt werden kann.

Ein Beispiel für eine Kapsel ohne integrierte Filtermittel wird bspw. in EP 1 886 942 offengelegt.

Eine becherförmige Kapsel ist in der EP 1 344 722 gelehrt. Die Kapsel gemäss dieser Schrift weist im Kapselinnem ein Verteil- oder Sammelorgan auf, welches einen ersten, mit Wasser bzw. dem Getränk zu füllenden Bereich der Kapsel von einem zweiten Bereich trennt, welcher das Extraktionsgut enthält. Das Verteil- oder Sammelorgan ist mit einer Vielzahl von Flüssigkeitskanälen zum Verteilen des Wassers bzw. Sammeln des Getränks versehen und so ausgebildet und angeordnet, dass es durch das Perforationsmittel der Kaffeemaschine nicht angestochen wird.

Weiter sind, beispielsweise aus der US 2005/0051478 Kapseln mit einem integrierten Filter bekannt. Der Filter übernimmt die Funktion eines Papierfilters einer bekannten Filterkaffeemaschine: in den mit dem Extraktionsgut versehenen Bereich der Kapsel wird durch eine Anstechspitze unter kleinem Druck oder drucklos Wasser injiziert, und nach dem Extraktionsprozess gelangt der Kaffee durch einen kapseleigenen Papierfilter in einen Sammelbereich, von wo aus er durch eine weitere Anstechspitze weggeleitet wird.

In vielen Regionen erfreut sich Filterkaffee nach wie vor grosser Beliebtheit. Dabei werden oft grössere Portionen von bis zu 3 oder 4 dl Filterkaffee in Kaffeebecher abgefüllt. Wenn solcher Filterkaffee aus einer Portionenkapsel zubereitet werden soll, reicht oft eine Kaffeemenge von bspw. 6-8 g, wie sie in bekannten Portionenkapseln von Espressomaschinen Platz findet, nicht aus. Daher sind auf Märkten mit einer Vorliebe für Filterkaffee die mit Portionenkapseln arbeiteten Kaffeemaschinen nicht sehr weit verbreitet. Dort, wo sie trotzdem zum Einsatz kommen, sind die Kapseln deutlich grösser als die bekanten Kapseln von für Espresso bekannten Kapselsystemen. Die Kaffeemaschinen weisen einen für grössere Portionenkapseln angepassten grösseren Brühraum und eine entsprechend für die Förderung von grösseren Mengen Heisswasser unter niedrigem Druck konfigurierte Pumpe auf. Für das Brühen von Espresso sind diese Kaffeemaschinen daher nicht geeignet.

Es wäre jedoch vorteilhaft, wenn auch die Liebhaber von Filterkaffee wahlweise mit den ihnen zur Verfügung stehenden Mitteln einen Espresso brühen könnten.

Es ist eine Aufgabe der Erfindung, eine Lösung für diese Problematik zu finden. Diese Lösung sollte insbesondere ermöglichen, dass Liebhabern sowohl von Filterkaffee in grösseren Volumina (und mit grösseren Kaffeemengen zuzubereiten) als auch von Espressokaffee diese beiden Getränke zur Verfügung stehen, ohne dass sie zwei komplett verschiedenen Geräte besitzen muss.

Diese Aufgabe wird gelöst durch die Erfindung, wie sie in den Patentansprüchen definiert ist.

Gemäss einem ersten Aspekt der Erfindung wird eine Portionenkapsel für ein Brühgetränk, insbesondere eine Kaffeekapsel, zur Verfügung gestellt, deren äussere Abmessungen auf die Grösse einer Kapsel für eine grosse Portion Filterkaffee (z.B. 300 ml oder mehr) abgestimmt ist, die aber ein Trennelement aufweist, welches einen Leerbereich von einem Extraktionsgutbereich trennt. Weiter ist mindestens ein Flüssigkeitskanal vorhanden, der den Leerbereich beispielsweise durchquert. Der Flüssigkeitskanal/die Flüssigkeitskanäle und der Extraktionsgutbereich sind so ausgestaltet, dass an einem Injektionsort in die Kapsel eingeleitetes Wasser bzw. in der Kapsel erzeugtes Getränk im Wesentlichen nicht in den Leerbereich gelangt.

Im vorliegenden Text wird generell unter niedrigem Druck von beispielsweise weniger als 5 bar, insbesondere 3 bar oder weniger und in grösserer Flüssigkeitsmenge gebrauter Kaffee als ,Filterkaffee' bezeichnet, während unter hohem Druck von beispielsweise mehr als 5 bar oder mehr als 8 bar gebraute Kaffeegetränke unter der Bezeichnung "Espresso" zusammengefasst werden. Der Begriff "Filterkaffee" umfasst also auch Kaffeegetränke, bei deren Brühprozess kein eigentlicher Filter vorhanden ist, und "Espresso" umfasst beispielsweise auch den "Espresso lungo".

Das Füllen einer grossen Kapsel mit einem Volumen von bspw. 30 ml mit einer kleinen Kaffeemenge von bspw. ca. 7 g hat sich nicht als günstige Option herausgestellt, da in einer solchen Konfiguration das Kaffeepulver nur verwirbeln würde und kein Espresso gebrüht werden könnte.

Das Vorgehen gemäss dem ersten Aspekt ermöglicht also, dass eine Portionskapsel mit einem vergleichsweise grossem Volumen einen volumenreduzierten Füllbereich, nämlich den Extraktionsgutbereich, aufweist, in welchem eine reduzierte Kaffeemenge vorhanden ist. Aufgrund der Flüssigkeitskanäle wird jedoch im Gegensatz zu aus dem Stand der Technik bekannten Ansätzen nicht das ganze äussere Kapselvolumen mit Flüssigkeit gefüllt. Für die Zubereitung von Espresso müssen die Pumpleistung einer Flüssigkeitspumpe und/oder die für die Getränkequalität wichtige Durchlaufzeit also nicht aufgrund des höheren Kapselvolumens grösser sein als bei bekannten Espressomaschinen. Auch besteht nicht der Nachteil, dass eine um das (im Vergleich zu bekanten Kapseln) grössere Kapselvolumen grössere Getränkemenge gebrüht werden müsste, und/oder dass die Kapsel nach dem Brühprozess zu einem grossen Prozentsatz mit heissem Wasser oder Getränk gefüllt wäre. Die Volumendifferenz zwischen einer ,grossen' Kapsel für Filterkaffee - diese sollte bis zu ca. 15 g Gramm Kaffee oder mehr aufnehmen und daher ein für die Füllung nutzbares Volumen von ca. 30-34 ml aufweisen - und einer Espressokapsel mit einem ca. halb so grossen Volumen ist im Vergleich zum Flüssigkeitsvolumen eines durchschnittlichen Espresso von bspw. 25 ml-40 ml durchaus relevant.

Im Vergleich zu denkbaren Systemen mit einer Kaffeemaschine, welche für unterschiedlich grosse Kapseln ausgebildet ist, besteht der Vorteil, dass die Kaffeemaschine für Kapselsysteme gemäss dem ersten Aspekt der Erfindung nur einen Brühraum benötigt, um Kaffee mit verschiedenen Füllvolumina zu brühen. Daher müssen entsprechend auch die Zu- und Wegleitungen zum bzw. vom Brühraum, die Anstechmittel, die Bewegungseinrichtung für das Verschliessen des Brühraums etc. nicht doppelt vorgesehen sein.

Der Leerbereich kann ein Hohlraumbereich sein, der durch die äussere Kapselwandung und das Trennelement gebildet wird und im Wesentlichen nur mit Luft oder einem Schutzgas gefüllt ist; auch ein geeignetes Füllmaterial, bspw. auf Basis eines festen Schaums, kann im Leerbereich vorhanden sein. Der Leerbereich kann durch die dann bspw. röhrenartigen Flüssigkeitskanäle durchquert werden, welche zum Extraktionsgutbereich führen. Unter den Ausführungsformen mit den Leerbereich durchquerenden und zum Extraktionsgutbereich führenden Flüssigkeitskanälen sind oft diejenigen besonders günstig, bei denen sich der Leerbereich auf der Injektionsseite und der Exraktionsgutbereich auf der Extraktionsseite der Kapsel befinden. Die Positionen der Flüssigkeitskanäle sind dann so auf die Positionen von Injektionsspitzen des Kaffeemaschinen-Brühmoduls abgestimmt, dass die Injektion der Brühflüssigkeit automatisch in die Flüssigkeitskanäle hinein erfolgt.

Die Flüssigkeitskanäle müssen nicht notwendigerweise den Leerbereich durchqueren in dem Sinn, dass sie rundum vom Leerbereich umgeben sind, sondern sie können bspw. auch entlang einer seitlichen Wand geführt sein.

Bei Ausführungsformen, bei denen die Flüssigkeit auf der Seite des Leerbereichs injiziert wird, wird der Injektionsort im Allgemeinen durch den Auftreffpunkt der Flüssigkeitskanäle auf eine injektionsseitige Aussenwandung definiert sein. Die Position der Anstechspitzen des Brühmoduls ist dann so auf die Kapsel abgestimmt, dass die Aussenwandung am entsprechenden Ort perforiert wird und dass die Anstechöffnung sich nur über einen vom entsprechenden Flüssigkeitskanal abgedeckten Flächenbereich erstreckt.

Es ist aber nicht ausgeschlossen, dass injektionsseitig ein speziell vorgesehener Sammelbereich vorhanden ist, von welchem die Flüssigkeit in die Flüssigkeitskanäle und von diesen anschliessend in den Extraktionsbereich belangt.

In Ausführungsformen, in denen die Flüssigkeit auf der Seite des Extraktionsgut-Bereichs eingespritzt wird, gelten die entsprechenden Überlegungen für den Ort der Anstechspitzen der Ausleitvorrichtung.

Das Vorgehen gemäss dem ersten Aspekt der Erfindung kann mit verschiedenen Injektions- und Ausleitvorrichtungen durchgeführt werden. Darunter befinden sich einerseits Systeme, bei denen die Kapsel injektionsseitig und extraktionsseitig (auf der Seite der Ausleitvorrichtung) gleichzeitig angestochen wird. Diese haben unter anderem den Vorteil, dass sie auch funktionieren, wenn - bspw. für das Brühen von Filterkaffee - der der Druck des eingeleiteten Wassers nicht hoch ist. Anderseits ist das Vorgehen jedoch auch für Systeme geeignet, bei denen ein extraktionsseitiges Perforieren der Kapsel erst nach Einleiten von Brühwasser durch den dann entstehenden Druck geschieht. Ein Beispiel eines für Polypropylen-Kapseln geeigneten Systems findet man in PCT/CH2010/000098, deren Inhalt durch Bezugnahme ein Bestandteil der vorliegenden Patentanmeldung bildet.

Das Vorgehen gemäss dem ersten Aspekt der Erfindung kann auch mit verschiedensten Kapsel-Aussenformen und Ausgestaltungen realisiert werden. Darunter ist die bekannte rotationssymmetrische Becherform, aber auch alternative Formen, wie beispielsweise in der PCT/CH2010/000097 gelehrt, deren Inhalt ebenfalls durch Bezugnahme ein Bestandteil der vorliegenden Patentanmeldung bildet.

Das Trennelement kann eine Trennwand sein oder aufweisen; die Form des Trennelements ist jedoch nicht kritisch.

Das Trennelement kann durch ein in die Kapsel einzulegendes Einlegeteil gebildet sein. Dieses bildet eine Trennwand zwischen Extraktionsgutbereich und Leerbereich sowie den mindestens einen Flüssigkeitskanal. Es ist so ausgebildet und/oder dichtend mit einer äusseren Kapselwandung verbunden, dass in die Kapsel eingeleitete Flüssigkeit nicht in wesentlichen Quantitäten in den Leerbereich gelangt. Zwischen dem Extraktionsgutbereich und dem Flüssigkeitskanal kann eine Mehrzahl von Durchtrittsöffnungen ausgebildet sein, die ein Durchleiten der Flüssigkeit ermöglichen, die aber so ausgestaltet sind, dass das Kaffeepulver nicht in wesentlichen Quantitäten in den Flüssigkeitskanal gelangt. Beispielsweise können die Durchtrittsöffnungen sich zum Flüssigkeitskanal hin verengend ausgebildet sein. Diese Form hat die Wirkung dass sich Kaffeepulver im trichterartigen konischen Bereich verfängt/verkeilt. Im Allgemeinen wird jedoch das Einlegeteil bzw. das sonstwie ausgestaltete Trennelement keine Filterfunktion haben sondern bloss der Trennung zwischen Extraktionsgutbereich und Leerbereich sowie ggf. der Bildung der Flüssigkeitskanäle dienen.

Es ist weiterhin auch möglich, dass die Flüssigkeitskanäle selbst mit Extraktionsgut gefüllt sind und also mindestens teilweise den Extraktionsgutbereich bilden.

Die Abdichtung des mindestens einen Flüssigkeitskanals zum Leebereich hin erfolgt bspw. dadurch, dass das Einlegeteil dort mit der Aussenwandung der Kapsel flüssigkeitsdicht verbunden ist, wo der Flüssigkeitskanal auf die Aussenwandung trifft. Diese Verbindung kann eine (Ultraschall-)Schweissverbindung, eine Klebung oder eine andere geeignete Verbindung sein. Alternativ kann auch eine andere geeignete abdichtende Verbindung vorgesehen sein, bspw. indem ein elastisch deformierbares Dichtungselement des Flüssigkeitskanals gegen die Aussenwandung gedrückt wird.

Eine Abdichtung des Exkraktionsgutbereichs zum Leebereich hin kann bspw. ebenfalls durch eine flüssigkeitsdichte Verbindung (Verschweissung; Verklebung) des Einlegeteil bzw. des Trennelements mit der Aussenwandung bewirkt sein. Alternativ dazu kann das Einlegeteil bzw. das Trennelement ein Dichtungselement aufweisen, welches elastisch deformierbar ist und gegen die Aussenwandung gedrückt wird. Insbesondere kann ein solches Dichtungselement so ausgebildet sein, dass es durch einen Innendruck im Exkraktionsgutbereich zusätzlich gegen die Aussenwandung gedrückt wird. Das Dichtungselement kann bspw. ein nach aussen ragender Dichtungslappen sein.

Alternativ oder zusätzlich dazu kann ein Dichtungslappen auch zwischen zusammengefügte Teile der Kapsel-Aussenwandung geklemmt sein, wodurch eine Labyrinthdichtungsartige Wirkung entsteht.

Das Aussenvolumen einer Portionenkapsel gemäss dem ersten Aspekt der Erfindung beträgt bspw. zwischen 25 bis 40 ml. Ein Verhältnis zwischen dem Volumen des Extraktionsgutbereichs und dem Kapsel-Aussenvolumen ist vorzugsweise mindestens 1.4, insbesondere mindestens 1.6.

Gemäss einem zweiten Aspekt der Erfindung, der besonders vorteilhaft mit dem ersten Aspekt der Erfindung kombiniert wird, wird ein Kaffee-Zubereitungssystem zur Verfügung gestellt, welches folgende Elemente aufweist:
- eine Kaffeemaschine mit einem Brühraum, in welchen jeweils eine durch injektionsseitige Anstechmittel und extraktionsseitige Anstechmittel der Kaffeemaschine anstechbare Portionenkapsel einlegbar ist, sowie mit einer Flüssigkeitspumpe zum Fördern von heissem Wasser in den Brühraum und durch die injektionsseitigen Anstechmitteln in die Portionenkapsel,
- einen erste Kaffeekapseltyp mit einem mit Kaffeepulver gefüllten ersten Extraktionsgutbereich, wobei der erste Extraktionsgutbereich ein erstes Volumen aufweist, und
- eine zweite Kaffeekapseltyp mit einem mit Kaffeepulver gefüllten zweiten Extraktionsgutbereich, wobei der zweite Extraktionsgutbereich ein zweites Volumen aufweist,
- wobei äussere Abmessungen von Kaffeekapseln des ersten Kaffeekapseltyps im Wesentlichen identisch mit äusseren Abmessungen von Kaffeekapseln des zweiten Kaffeekapseltyps sind und wobei Kaffeekapseln beider Typen in ihren Abmessungen auf den Brühraum abgestimmt sind, und
- wobei das erste Volumen grösser ist als das zweite Volumen.

Die beiden Volumina des ersten und des zweiten Extraktionsgutbereichs unterscheiden sich dabei signifikant, bspw. indem das erste Volumen mindestens das 1.4-fache des zweiten Volumens, insbesondere mindestens das 1.6-fache des zweiten Volumens beträgt.

Das erste Volumen ist dabei vorzugsweise auch signifikant grösser als das Füllvolumen konventioneller Espresso-Portionenkapsen und beträgt bspw. 25 ml oder mehr. Das Volumen kann insbesondere zwischen 25 und 40 ml für eine Füllmenge von ca. 10-18 g Kaffee betragen.

In bevorzugten Ausführungsformen sind die Kaffeekapseln des ersten Typs ganz mit Kaffee gefüllt, das heisst das erste Volumen entspricht einem Kaffeekapsel-Gesamtvolumen (d.h. dem durch die äusseren Abmessungen bestimmten Volumen abzüglich des Volumens der im allgemeinen vergleichsweise dünnen äusseren Wandung).

Die Kaffeemaschine ist ausserdem vorzugsweise dafür eingerichtet, die Flüssigkeitspumpe in zwei verschiedenen Betriebszuständen zum Erzeugen zweier unterschiedlicher Pumpdrücke anzusteuern, wobei ein erster Pumpdruck unter 5 bar bzw. unter 3 bar beträgt und ein zweiter Pumpdruck über 8 bar bzw. über 5 bar beträgt.

Die Kapseln des zweiten Typs (bzw. Kapseln gemäss dem ersten Aspekt der Erfindung) und Kaffeemaschine so aufeinander abgestimmt, dass Injektion auf der Seite des Leerbereichs erfolgt.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen sind nicht massstäblich und zeigen teilweise einander entsprechende Elemente in von Figur zu Figur unterschiedlichen Grössen. Es zeigen:
- Figur 1 eine Ansicht einer Kaffee-Portionenkapsel;
- Figuren 2 und 3 je eine Ansicht des Kapselkörpers und des Kapseldeckels der Kaffee-Portionenkapsel gemäss Figur 1;
- Figuren 4 und 5 je eine Ansicht eines Einlegeteils einer Portionenkapsel;
- Figur 6 eine Darstellung des angeschnittenen Einlegeteils;
- Figur 7 eine Unteransicht des Einlegeteils;
- Figur 8 eine schematische Schnittdarstellung der Kapsel mit Einlegeteil;
- Figuren 9 und 10 je in vergrösserter Schnittdarstellung ein Detail des Einlegeteils bzw. der Kapsel-Aussenwandung und des Einlegeteils;

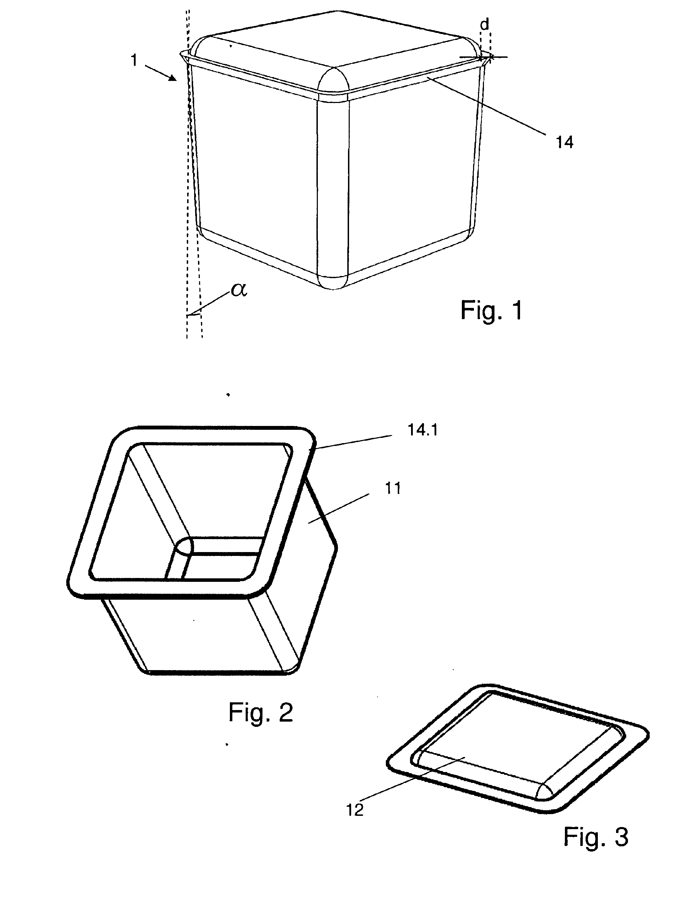

- Figur 1 ein Einlegeteil einer alternativen Ausführungsform;

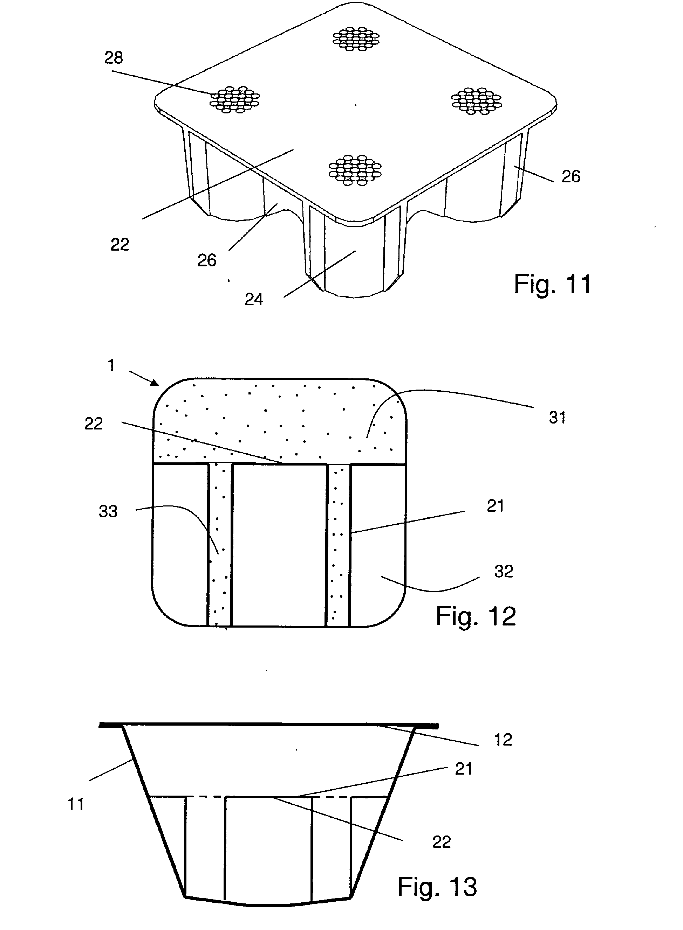

- Figuren 12 und 13 je alternative Ausführungsformen einer Portionenkapsel;

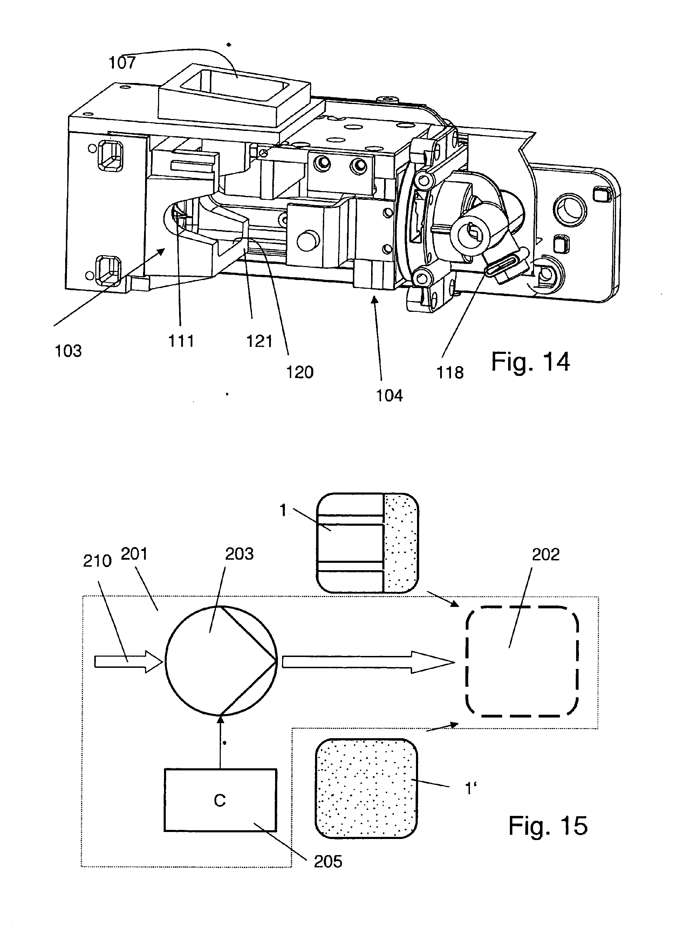

- Figur 14 eine Ansicht eines Brühmoduls einer Kaffeemaschine; und
- Figur 15 eine schematische Darstellung von Komponenten eines erfindungsgemässen Systems.

Die Kapsel 1 gemäss **Figur 1** ist im Wesentlichen würfelförmig. Die in der Figur oben liegende Seite ist jedoch etwas grösser als die Unterseite, so dass de Kapsel streng mathematisch gesehen eine Pyramidenstumpfform hat. Der Neigungswinkel α der in der Figur seitlichen Flächen gegenüber der Senkrechten zur Grundfläche - gemeint ist natürlich diejenige zur Grundfläche senkrechte Ebene, die durch die Kante zwischen der Grundfläche und der entsprechenden seitlichen Fläche verläuft - ist sehr klein, er beträgt vorzugsweise höchstens 2° zum Beispiel nur ca. 1°. Ausserdem entspricht die Höhe der Kapsel über der Grundfläche näherungsweise der Länge der Grundflächenkanten.

Die Kapsel-Aussenwand ist aus einem in **Figur 2** dargestellten Kapselkörper 11 und einem in **Figur 3** abgebildeten Deckel 12 im Ultraschall-Trennschweissverfahren hergestellt. Betreffend die Kapsel-Aussenwand und betreffend Verfahren zu dessen Herstellung wird auf die internationale Patentanmeldung PCT/CH2010/000097 bezog genommen. Deutlich sichtbar sind der ganz leicht von 0° verschiedene Winkel α von ca. 1° und die umlaufende Schweissbraue 14, die allseits um maximal ca. d=0.35 mm seitlich vorsteht, also maximal um ca. 2-3%.

Die äussere Wandung der Kapsel besteht aus Polypropylen mit einer Wandstärke von 0.1 mm und 0.5 mm, vorzugsweise zwischen 0.2 mm und 0.4 mm, bspw. zwischen 0.25 mm und 0.35 mm. Auch andere Materialien sind denkbar, insbesondere andere lebensmittelverträgliche Kunststoffe. Die Wandstärke der äusseren Wandung ist bspw. auf allen Seiten ungefähr gleich. Die äussere Länge der Würfelkanten beträgt bevorzugt zwischen 30 mm und 34 mm, für eine Füllmenge von 12-18 g Kaffee.

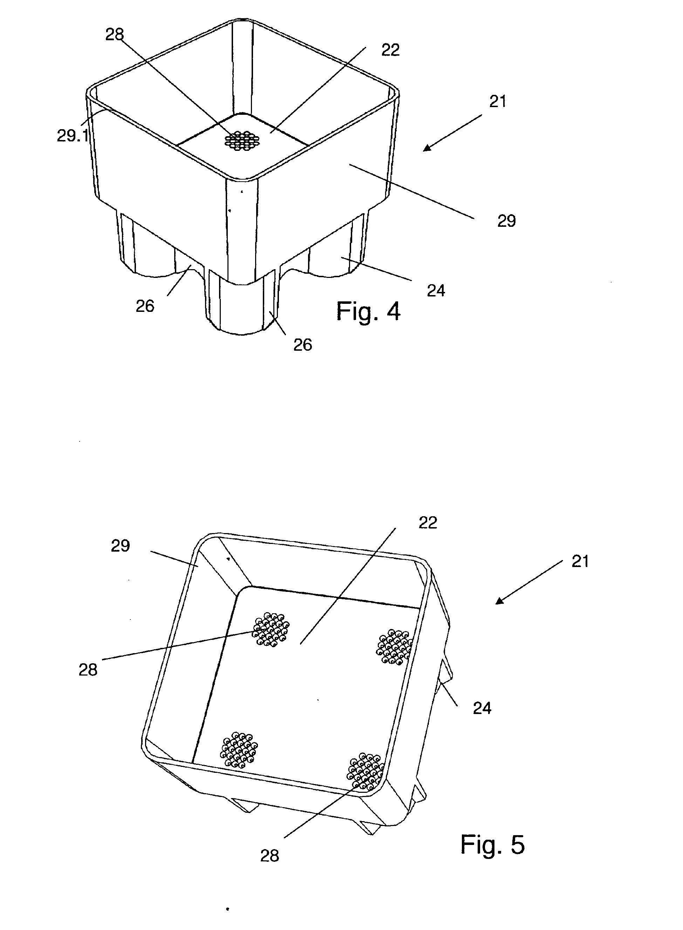

Im Unterschied zur Kapsel gemäss PCT/CH2010/000097 ist die Kapsel 1 gemäss der vorliegenden Beschreibung nicht nur mit dem Extraktionsprodukt (gemahlenem Kaffee) gefüllt und im Inneren homogen. Vielmehr ist im Innern der Kapsel ein Einlegeteil 21 vorhanden, wie es in **Figuren 4-7** dargestellt ist. Dieses ist bspw. ebenfalls aus Polypropylen gefertigt und weist eine das Trennelement bildende Trennwand 22 auf, welche, wenn im Kapselinnem angeordnet, einen in der Figur 4 oben liegenden Extraktionsgut-Bereich von einem in Figur 4 unten liegenden Leerbereich der Kapsel trennt. Von der Trennwand 22 zur Seite des Leerbereichs hin erstrecken sich rohrartige Fortsätze 24, welche eine ungefähr hohlzylindrische Form haben und als die Flüssigkeitskanäle dienen. Zwischen den Fortsätzen 24 und aussenseitig an diesen sind noch optionale strebenartige Verstärkungen 26 vorhanden, welche sich wie die Flüssigkeitskanäle in den Leerbereich erstrecken. Zwischen dem Innern der Flüssigkeitskanäle und dem Extraktionsgut-Bereich ist die Trennwand von Regionen mit Durchtrittsöffnungen 28 durchsetzt. Durch diese tritt während des Brühprozesses das heisse Brühwasser von in Figur 4 unten in den Extraktionsgut-Bereich, wo es in an sich bekannter Art das Extraktionsgut durchtränkt.

In der dargestellten Ausführungsform weist das Einlegeteil ausserdem eine kragenartig zur Extraktionsgutseite hin ragende umlaufende Wand 29 auf. Diese bildet zusammen mit der Trennwand eine becherartige Struktur in welcher sich das Extraktionsgut oder ein Teil davon befindet.

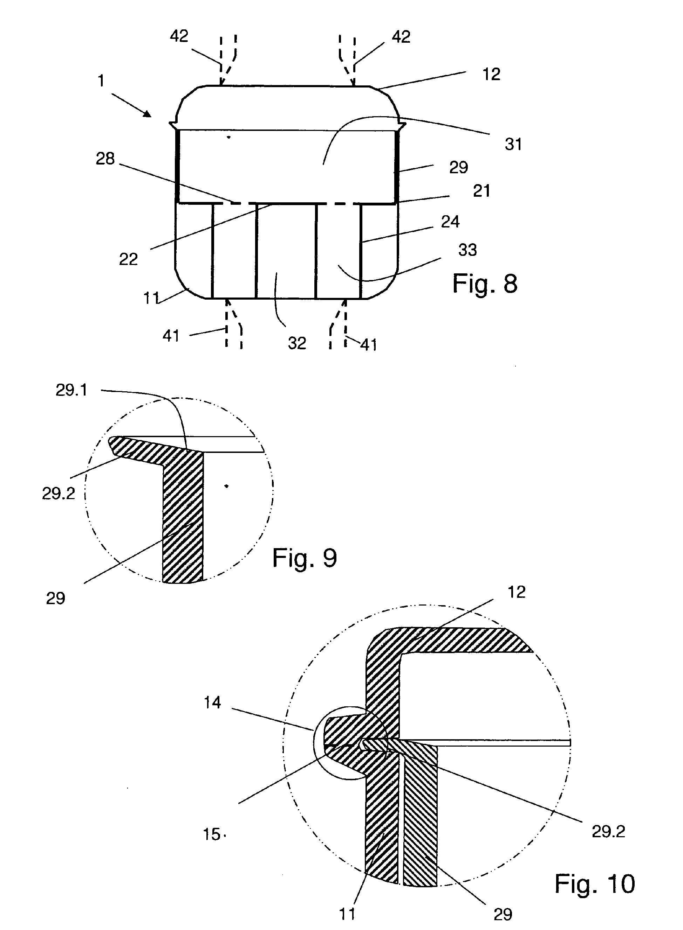

In **Figur 8** sieht man schematisch, wie das Einlegeteil 21 im Innern der Kapsel 1 angeordnet ist. Man sieht auch, dass die Kapsel durch das Einlegeteil in drei Arten von Bereichen unterteilt wird. Der Extraktionsgut-Bereich 31 wird durch die in Figur 8 horizontale Trennwand 22 vom Leerbereich 32 getrennt. Die durch die Fortsätze 24 gebildeten Flüssigkeitskanäle trennen zusammen mit den durch die Durchtrittsöffnungen durchsetzten Bereich 28 der Trennwand 22 die Flüssigkeitskanal-Bereiche 33 ab. Die Fortsätze reichen bis zur leerbereichsseitigen Aussenwandung der Kapsel und sind mit dieser beispielsweise flüssigkeitsdicht verbunden. Für den Brühprozess wird die Kapsel-Aussenwandung injektionsseitig im Bereich der Flüssigkeitskanäle durch ein Perforationsmittel durchstossen, das so dimensioniert ist, dass die Kapsel nur im Bereich der Flüssigkeitskanal-Bereiche 33 perforiert wird und die Brühflüssigkeit nur in diese Bereiche und nicht in den daneben liegenden Leerbereich 32 eingeschossen wird. In Figur 8 sind gestrichelt und schematisch dargestellte injektionsseitige Perforationsspitzen 41 eingezeichnet, und zwar an der Position, an der sie zur Perforation ansetzen, welche durch eine relative Bewegung der Spitzen aus der dargestellten Position zur Kapselmitte hin bewirkt wird. Die Flüssigkeit gelangt unter Druck durch die Durchtrittsöffnungen 28 in den Exktraktionsgut-Bereich 31, wo ein Brühprozess der an sich bekannten Art stattfindet. Der Austritt des Getränks erfolgt durch Perforationen der in der Figur 8 oben liegenden Kapselwandung. Auch die extraktionsseitigen Perforationsspitzen 42 sind in Fig. 8 schematisch in der Position gezeichnet, in der sie zur Perforation ansetzen. Beim Verschliessen einer Brühkammer, welche die Perforationsspitzen 41, 42 aufweist, werden beispielsweise die injektionsseitige Perforationsspitzen 41 und die extraktionsseitigen Perforationsspitzen 42 gleichzeitig durch die äussere Kapselwandung gestossen; wie erwähnt können jedoch zunächst auch nur die injektionsseitigen Perforationsspitzen perforieren, und ein Anstechen durch die extraktionsseitigen Perforationsspitzen kann erfolgen, indem die Kapsel unter dem Druck der Brühflüssigkeit deformiert wird.

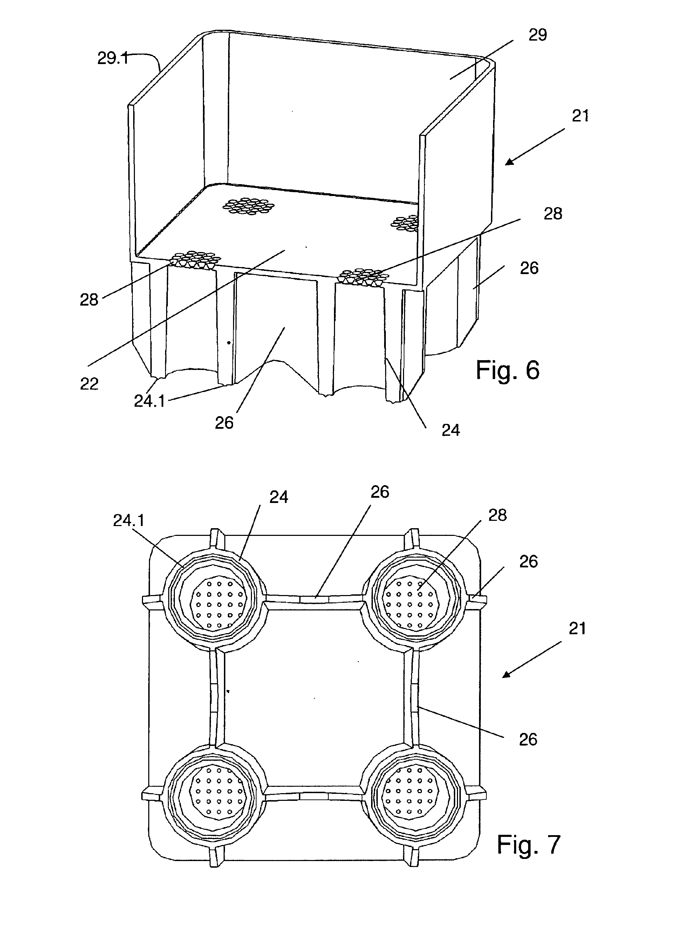

In **Figur 6** werden weitere Merkmale deutlich sichtbar.

Zum einen sieht man, dass die Durchtrittsöffnungen 28 nicht zylindrisch sind, sondern sich konisch nach unten - also zum Leerbereich hin - verengen. Diese Ausgestaltung hat den Zweck und die Wirkung, dass sich Kaffeepulver im trichterartigen konischen Bereich verfängt/verkeilt und auch dann nicht in den Flüssigkeitskanal-Bereich 33 gelangt, wenn die Kapsel mechanischen Erschütterungen ausgesetzt ist. Dies funktioniert auch dann, wenn die Durchtrittsöffnungen an ihrer engsten Stelle einen grösseren Durchmesser aufweisen als die durchschnittliche Komgrösse des Kaffeepulvers.

Zum anderen ist in Figur 6 sichtbar, dass die rohrartigen Fortsätze 24, welche die Flüssigkeitskanäle bilden, an ihrer Endseite (d.h. der leerbereichseitigen Endseite) einen spitz zulaufenden Kamm 24.1 aufweisen, welcher bei einer Ultraschallschweissung des Einlegeteils an die leerbereichsseitig endseitige Aussenwandung als Energierichtungsgeber fungiert.

In **Figur 9** ist weiterhin ein Detail dargestellt, welches in Figuren 3-8 nicht vorhanden ist, das aber in der Ausführungsform der Figuren 1-8 vorhanden sein kann. An der Kante 29.1 der umlaufenden Wand 29 ist ein nach aussen ragender Lappen 29.2 ausgebildet, der hier mit der umlaufenden Wand 29 einstückig ist und aufgrund seiner Dicke flexibel nach ,oben' (d.h. zur Extraktionsgutseite hin) oder nach ,unten' (d.h. zur Leerseite hin) ausweichen kann. Beim Einsetzen in die in Figur 8 dargestellte Position wird der Lappen 29.2 durch die Aussenwandung nach innen und nach oben gedrückt.

Der Lappen 29.2 hat während des Brühprozesses eine dichtende Wirkung und verhindert, dass das gebrühte Getränk aufgrund des Brühdrucks im Innern des Extraktionsgut-Bereichs aussenseitig an der umlaufenden Wand entlang zurück in den Leerbereich gelangen kann. Der Brühdruck im Innern des Extraktionsgut-Bereichs wird den Kappen 29.2 nach aussen gegen die - unter Umständen durch externe Mittel der Brühkammer gestützte - Kapsel-Aussenwandung drücken und so die Dichtwirkung selbsttätig verstärken.

Unter Umständen kann zusätzlich vorgesehen sein, dass der Lappen aufgrund seiner Position beim Verschliessen der Kapsel im Trennschweiss-Verfahren zwischen dem anfänglich vorhandenen und während des Trennschweissverfahrens abgetrennten umlaufenden Kragen 14.1 des Kapselkörpers 11 und dem Deckel 12 geklemmt wird und so durch das Verschliessen der Kapsel eine Art Labyrinthdichtung oder gar ein Stoffschluss zwischen der Kapselwandung und dem Einlegeteil entsteht. Dies ist in **Figur 10** dargestellt. Figur 10 zeigt ein Detail der Kapsel an der Stelle, an welcher der Deckel 12 mit dem Trennschweissverfahren mit dem Kapselkörper verbunden ist. Da die Verbindung eine Schweissverbindung und damit ein Stoffschluss ist, ist keine Trennlinie zwischen dem Material des Kapselkörpers 11 und dem Material des Deckels 12 sichtbar. Die gestrichelte Linie 15 zeigt den ungefähren Verlauf

Übergang zwischen Kapselkörper und Deckel. Der umlaufende Kragen 14.1 ist im Trennschweissverfahren abgetrennt worden.

Der Lappen 29.2 ist wie dargestellt im Bereich der Schweissbraue zwischen den Deckel und den Kapselkörper geklemmt, was als Abdichtungsmittel im Sinne einer Labyrinthdichtung wirkt. Eventuell kann der Kragen auch mit dem Kapselkörper und/oder Deckel verschweisst sein.Die Herstellung der Kapsel erfolgt wie folgt:

In einem ersten Schritt wird der Kapselkörper 11 zur Verfügung gestellt und das Einlegeteil 21 in diesen Eingelegt. Dann werden die Endseiten der Fortsätze 24 des Einlegeteils 21 mit Ultraschallschweissen am ,Boden' des Kapselkörpers festgeschweisst. Anschliessend wird die Kapsel mit dem Extraktionsgut befüllt. Dann wird mittels des Trennschweissverfahrens der Deckel am Kapselkörper befestigt, wobei gegebenenfalls wie erwähnt auch der Lappen des Einlegeteils festgeklemmt oder gar angeschweisst werde kann.

Nachfolgend werden noch einige alternative Ausführungsformen von erfindungsgemässen Kapseln diskutiert. Bei dieser Diskussion gehen wir nur auf die Unterschiede zur vorstehend diskutierten Kapsel ein. Die Prinzipen und Merkmale der vorstehend beschriebenen Ausführungsform gelten - soweit anwendbar - auch für die alternativen Ausführungsformen.

Das Einlegeteil gemäss **Figur 11** weist keine umlaufende Wand auf, sondern besteht nur aus der Trennwand 22 und den Fortsätzen 24 mit den optionalen Verstärkungen 26. Gegebenenfalls kann direkt an die Trennwand anschliessend ein in der Figur nicht dargestellter umlaufender Lappen vorhanden sein der gemäss dem diskutierten Prinzip eine dichtende Wirkung hat.

Die nur sehr schematisch dargestellte Kapsel gemäss **Figur 12** unterscheidet sich von den vorstehend beschriebenen Ausführungsformen dadurch, dass der Extraktionsgut-Bereich 31 und die Flüssigkeitskanal-Bereiche 33 zusammenhängend sind und ineinander übergehen. Die Trennwand 22 ist also beim Übergang zu den Flüssigkeitskanälen unterbrochen, und das Extraktionsgut gelangt auch in die Flüssigkeitskanäle. Der in Figur 12 gepunktete Bereich zeigt an, wie das Extraktionsgut verteilt ist. Das Prinzip gemäss Figur 12 kann selbstverständlich für Ausführungsformen mit oder ohne umlaufender Wand und für Ausführungsformen mit oder ohne den dichtenden Lappen vorgesehen sein.

Das in Figur 12 gezeichnete Prinzip kann noch abgewandelt werden. Beispielsweise kann ein einziger vorhandener Flüssigkeitskanal oder können mehrere Flüssigkeitskanäle so verbreitert werden, dass der Flüssigkeitskanal/die Flüssigkeitskanäle den ganzen Extraktionsgutbereich bilden. Der Flüssigkeitskanal/die Flüssigkeitskanäle wird/werden dann mit Extraktionsgut gefüllt sein und das ganze Kapselinnere bis zur Oberseite hin durchqueren. Eine oberseitige Abdichtung kann bspw. durch einen nach oben und nach innen ragenden Dichtungslappen bewirkt werden. Als Alternative kann bei geeigneter Wahl der Energierichtungsgeber auch das den Flüssigkeitskanal/die Flüssigkeitskanäle bildende Einlegeteil gleichzeitig sowohl ober- als auch unterseitig mit der Kapsel-Aussenwandung verschweisst werden.

Die in **Figur 13** dargestellte Kapsel unterscheidet sich von den vorstehend beschriebenen Ausführungsformen durch ihre äussere Form. Die Kapsel hat die Form eines konisch nach unten (also zum Leerbereich hin) zulaufenden, rotationssymmetrischen Bechers mit einem nach aussen ragenden Kragen. Im Bereich des Kragens ist der becherartige Kapselkörper 11 mit dem flachen Deckel 12 verschweisst. Das Einlegeteil 21 weist eine entsprechend angepasste Form auf, d.h. die Trennwand 22 ist scheibenförmig. Ansonsten gelten dieselben Prinzipien wie bei den vorstehend beschriebenen Ausführungsformen.

In der vorstehenden Beschreibung von Ausführungsformen wurde jeweils davon ausgegangen, dass die Injektion der Brühflüssigkeit auf der Seite des Leerbereichs und das Ausleiten auf der Seite des Extraktionsgutbereichs erfolgt. Dies ist eine besonders günstige Anordnung, unter anderem weil dann kein gebrühtes, in den Flüssigkeitskanälen nach dem Brühprozess zurückbleibendes Getränk 'verschwendet' wird, und auch weil ggf. keine Verstopfungsproblematik im Bereich der Durchtrittsöffnungen entstehen kann, da durch diese ja nur Wasser durchgeleitet wird. Es ist aber durchaus auch eine Option, das Umgekehrte vorzusehen, die Brühflüssigkeit direkt in den Extraktionsgutbereich einzubringen und das Getränk durch die Flüssigkeitskanäle abzuführen.

**Figur 14** zeigt ein Brühmodul einer Kaffeemaschine. Das Brühmodul kann bspw. gemäss der Lehre von PCT/CH2010/000099 (mit oder ohne Mittel zur Kapselkompression) ausgebildet sein, deren Inhalt durch Bezugnahme ein Bestandteil der vorliegenden Patentanmeldung bildet.

Das Brühmodul bildet in einem geschlossenen Zustand (in Figur 14 ist der besseren Übersichtlichkeit halber ein nicht geschlossener Zustand illustriert) eine Brühkammer, deren Geometrie und Abmessung auf eine entsprechende Kapsel abgestimmt ist. Das Brühmodul ist aufgrund des erfindungsgemässen Vorgehens sowohl für Kapseln mit einer grossen Füllmenge und ohne Trennelement als auch für Kapseln mit einer reduzierten Füllmenge und mit Trennelement eingerichtet.

Das Brühmodul weist in an sich bekannter Art zwischen einem Gerüst mit zwei vertikalen Führungswänden geführt eine Ausleitvorrichtung 103 und einen Injektor 104 auf, die beispielsweise durch einen schwenkbaren Bedienhebel angetrieben relativ zueinander verschiebbar sind.

In Figur 14 gut sichtbar ist die Einwurföffnung 107 zum Einwerfen der hier im Wesentlichen kubischen Portionenkapsel. Die Einwurföffnung 107 ist im Gerüst ausgebildet, befindet sich im Bereich der Ausleitvorrichtung 103 und bleibt wie diese bei einer Bewegung des Bedienhebels stationär. Die Einwurföffnung 107 kann sich gegen unten verengend leicht konisch sein um so beim Einwerfen eine zentrierende Wirkung auf die Kapsel zu haben, ohne dass die Gefahr eines Verkantens der Kapsel zu gross wäre.

Der Kapseleinwurf von Kapseln mit Trennelement (hier mit Einlegeteil, das eine Trennwand bildet) erfolgt so, dass sich die in Figuren 1, 4, 6, 8, 11, 12 unten liegende Seite (entsprechend der Seite mit dem Leerbereich) auf der Injektorseite, also in Fig. 14 rechts befindet.

Im Betriebszustand dient das Brühmodul als horizontale Brühmodul einer Kaffeemaschine, welche nebst dem Brühmodul einen Wassertank, eine Wasserheizungsvorrichtung (bspw. Durchlauferhitzer) und eine Pumpe zum Zutühren von Brühwasser zum Injektor 104 aufweist. Die entsprechenden Zuführkanäle 118 des Injektors können wie an sich bekannt ausgebildet sein. Der Injektor weist ausserdem mindestens eine Anstechspitze mit zugeordneter Zuführöffnung auf, so dass die Kapsel angestochen und durch die Zuführöffnung mit der Extraktionsflüssigkeit versorgt werden kann. Die Kaffeemaschine weist weiter bspw. einen unterhalb der Brühkammer angeordneten Kapselbehälter auf, in welchen die Kapsel nach dem Brühvorgang durch Anheben des Bedienhebels selbsttätig ausgeworfen wird.

Auch die Ausleitvorrichtung 103 ist mit mindestens einer Anstechspitze 111 und einer zugeordneten Ausleitöffnung versehen. Weiter ist je nach Konfiguration auch eine Auslaufleitung vorhanden, mit welcher aus dem Austritt der Ausleitvorrichtung 103 austretender Kaffee (oder dgl.) so geführt wird, dass er in eine am vorgesehenen Ort abgestellte Tasse rinnt.

In der dargestellten Ausführungsform bildet die Ausleitvorrichtung 103 eine Kapselaufnahme mit einer die Auflagefläche 120 definierende Auflage 121 für die durch die Einwurföffnung 107 eingeworfene Kapsel. Die bei offener Brühkammer durch die Einwurföffnung eingeworfene annähernd würfelförmige Kapsel wird durch die ersten Seitenwände geführt auf der Auflage 121 aufliegen. Anschliessend wir die Brühkammer durch eine Bewegung des Injektors zur Ausleitvorrichtung 103 hin verschlossen, wodurch auch die Kapsel angestochen wird. In der dargestellten Ausführungsform erfolgt ein Anstechen vor dem Einsetzen des Brühprozesses sowohl auf der Injektorseite als auch auf der Seite der Ausleitvorrichtung 103. Es sind jedoch auch Ausführungsformen - insbesondere mit Aluminium aber auch mit Kunststoff als Material der Kapselwandung oder eines Teils davon - denkbar, bei denen ein Anreissen oder Anstechen der Kapsel auf der Seite der Ausleitvorrichtung 103 erst durch den Innendruck in der Kapsel beim Einsetzen des Brühprozesses bewirkt wird.

**Figur 15** zeigt sehr schematisch ein Kaffee-Zubereitungssystem nach dem ersten Aspekt der Erfindung. Die Kaffeemaschine 201 weist nebst einer Brühkammer 202 - bspw. der anhand von Figur 14 illustrierten Art, oder bspw. auch durch einen Kolben und eine Anlagefläche für den Kolben gebildet - eine Pumpe zum Fördern von Heisswasser 210 auf, durch welche das Heisswasser der Brühkammer unter Druck zuführbar ist. Eine Pumpen-Ansteuerung 205 regelt den Pump- und Brühdruck. Insbesondere kann die Kaffeemaschine dafür eingerichtet sein, wahlweise auf einen tieferen Pumpdruck von oft weniger als 5 bar, insbesondere weniger als 3 bar, bspw. ca. 1.5-2bar ("Filterkaffee") oder einem höheren Pumpdruck von mindestens 5 bar, insbesondere mindestens 8 bar, bspw. zwischen 8 bar und 20 bar ("Espresso") betrieben zu werden. Das Umschalten zwischen den verschiedenen Pumpdrücken erfolgt oft manuell. Es kann aber auch eine Einrichtung vorhanden sein, die das selbsttätig, beispielsweise anhand von Merkmalen einer eingeworfenen Kapsel regelt. Bspw. können die verschiedenen Kapseln des Systems mit unterschiedlichen optisch oder über RFID oder dergleichen auslesbaren Markierungen versehen sein, die von einer entsprechenden Auslesevorrichtung der Kaffeemaschine erkannt werden, worauf der Pumpdruck entsprechend angepasst wird.

Das Kaffee-Zubereitungssystem weist ausserdem mindestens zweierlei Typen Kaffee-Portionenkapseln 1, 1' auf. Diese unterscheiden sich im Innenvolumen (Volumen des Extraktionsgutbereichs), welches dem Extraktionsgut zur Verfügung steht, während die äusseren Abmessungen im Wesentlichen identisch sind. Insbesondere kann ein Kapseltyp 1 ("Espressokapsel") gemäss dem ersten Aspekt der Erfindung ausgestaltet sein, während ein anderer Kapseltyp 1' ("Filterkaffeekapsel") konventionell ausgestaltet ist und also einen ganz gefüllten Innenraum aufweist oder bspw. auch einen im Kapselinnern angeordneten Filter aufweisen kann.

Es wäre beim Kaffee-Zubereitungssystem gemäss dem zweien Erfindungsaspekt auch möglich, den Kapseltyp der Espressokapsel anders als gemäss dem ersten Aspekt der Erfindung auszugestalten und bspw. die Flüssigkeitskanäle wegzulassen, wodurch der Leerbereich der Espressokapsel beim Brühprozess durch Wasser bzw. das Getränk geflutet würde.

Die Anwendung des Vorgehens gemäss dem ersten Aspekt oder gemäss dem zweiten Aspekt für andere Getränke als Kaffee - bspw. Tee - ist möglich.

## Patentansprüche

1. Portionenkapsel (1) für ein Brühgetränk, insbesondere Kaffee, aufweisend eine äussere Wandung und einem im Kapselinnem angeordneten, mit einem Extraktionsgut gefüllten Extraktionsgut-Bereich (31), **dadurch gekennzeichnet, dass** im Kapselinnem ein Trennelement (22) vorhanden ist, welches einen Leerbereich (32) vom Extraktionsgut-Bereich (31) trennt, und dass weiter im Kapselinnern mindestens ein Flüssigkeitskanal (24) vorhanden ist, derart, dass an einem Injektionsort in die Kapsel eingeleitete Flüssigkeit in Kontakt mit dem Extraktionsgut kommt und an einer vom Injektionsort verschiedenen Stelle aus der Kapsel ableitbar ist, im Wesentlichen ohne dass die Flüssigkeit in den Leerbereich gelangt.

2. Portionenkapsel nach Anspruch 1, **dadurch gekennzeichnet, dass** der mindestens eine Flüssigkeitskanal den Leerbereich durchquert.

3. Portionenkapsel nach Anspruch 2, **dadurch gekennzeichnet, dass** der mindestens eine Flüssigkeitskanal als Röhre ausgebildet ist.

4. Portionenkapsel nach einem der vorangehenden Ansprüche, **dadurch gekennzeichnet, dass** das Trennelement (22) durch ein Einlegeteil (21) gebildet wird, welches in einen beispielsweise durch einen Deckel (12) verschlossenen Kapselkörper (11) eingelegt ist.

5. Portionenkapsel nach Anspruch 4, **dadurch gekennzeichnet, dass** das Einlegeteil (21) mindestens einen vom Trennelement (22) weg ragenden, hohlkörperartigen Fortsatz (24) aufweist, welcher bis zu der äusseren Wandung reicht und den mindestens einen Flüssigkeitskanal bildet, wobei der Fortsatz vorzugsweise mit der Wandung verbunden, bspw. verklebt oder verschweisst ist.

6. Portionenkapsel nach Anspruch 4 oder 5, **dadurch gekennzeichnet, dass** das Einlegeteil (21) eine umlaufende Wand (29) aufweist, die zusammen mit dem Trennelement (22) einen becherartige, mit mindestens einem Teil des Extraktionsguts gefüllte Struktur bildet.

7. Portionenkapsel nach einem der Ansprüche 4-6, **dadurch gekennzeichnet, dass** das Einlegeteil einen Dichtungslappen (29.2) aufweist, welcher durch einen erhöhten Druck im Extraktionsgut-Bereich an die äussere Wandung gedrückt wird.

8. Portionenkapsel nach Anspruch 7, wobei die äussere Wandung durch einen Kapselkörper (11) und einen diesen verschliessenden Deckel (12) gebildet wird, **dadurch gekennzeichnet, dass** der Dichtungslappen (29.2) zwischen dem Kapselkörper und dem Deckel eingeklemmt ist.

9. Portionenkapsel nach einem der vorangehenden Ansprüche, **dadurch gekennzeichnet, dass** der Leerbereich bis auf den mindestens einen Flüssigkeitskanal und eventuelle Verstärkungen (26) hohl ist.

10. Portionenkapsel nach einem der vorangehenden Ansprüche, **dadurch gekennzeichnet, dass** das Trennelement (22) eine Mehrzahl von den Extraktionsgut-Bereich mit dem mindestens einen Flüssigkeitskanal verbindende Durchtrittsöffnungen aufweist, wobei die Durchtrittsöffnungen (28) vorzugsweise sich zum Flüssigkeitskanal hin verengend konisch sind.

11. Getränke-Zubereitungssystem, aufweisend:
- eine Getränke-Zubereitungsmaschine (201) mit einem Brühraum (202), in welchen jeweils eine durch injektionsseitige Anstechmittel und extraktionsseitige Anstechmittel (111) der Getränke-Zubereitungsmaschine anstechbare Portionenkapsel einlegbar ist, sowie mit einer Flüssigkeitspumpe (203) zum Fördern von heissem Wasser in den Brühraum und durch die injektionsseitigen Anstechmitteln in die Portionenkapsel,
- eine erste Kapsel (1') mit einem mit Extraktionsgut gefüllten ersten Extraktionsgutbereich, wobei der erste Extraktionsgutbereich ein erstes Volumen aufweist, und
- eine zweite Kapsel (1) mit einem mit Extraktionsgut gefüllten zweiten Extraktionsgutbereich, wobei der zweite Extraktionsgutbereich ein zweites Volumen aufweist,
- wobei äussere Abmessungen der ersten Kapsel (1') im Wesentlichen identisch mit äusseren Abmessungen der zweiten Kapsel (1) sind und wobei Kapseln (1, 1') beider Typen in ihren Abmessungen auf den Brühraum abgestimmt sind,
- wobei die zweite Kapsel (1) eine Portionenkapsel nach einem der vorangehenden Ansprüche ist, und wobei
- das erste Volumen grösser ist als das zweite Volumen.

12. Getränke-Zubereitungssystem, aufweisend:
- eine Getränke-Zubereitungsmaschine (201) mit einem Brühraum (202), in welchen jeweils eine durch injektionsseitige Anstechmittel und extraktionsseitige Anstechmittel (111) der Getränke-Zubereitungsmaschine anstechbare Portionenkapsel einlegbar ist, sowie mit einer Flüssigkeitspumpe (203) zum Fördern von heissem Wasser in den Brühraum und durch die injektionsseitigen Anstechmitteln in die Portionenkapsel,
- einen erste Kapseltyp (1') mit einem mit Extraktionsgut gefüllten ersten Extraktionsgutbereich, wobei der erste Extraktionsgutbereich ein erstes Volumen aufweist, und
- eine zweite Kapseltyp (1) mit einem mit Extraktionsgut gefüllten zweiten Extraktionsgutbereich, wobei der zweite Extraktionsgutbereich ein zweites Volumen aufweist,
- wobei äussere Abmessungen von Kaffeekapseln des ersten Kapseltyps (1') im Wesentlichen identisch mit äusseren Abmessungen von Kapseln des zweiten Kapseltyps (1) sind und wobei Kapseln (1, 1') beider Typen in ihren Abmessungen auf den Brühraum abgestimmt sind,
- **dadurch gekennzeichnet, dass** das erste Volumen grösser ist als das zweite Volumen.

13. Getränke-Zubereitungssystem nach Anspruch 12, wobei ein Pumpdruck der Förderpumpe zwischen mindestens zwei verschiedenen Betriebszuständen umschaltbar ist.

14. Getränke-Zubereitungssystem nach Anspruch 12 oder 13, **dadurch gekennzeichnet, dass** das erste Volumen mindestens 25 ml beträgt.
